# EUROPEAN PATENT APPLICATION

(11) **EP 4 755 681 A1**
(43) Date of publication of application: **10.06.2026**
(21) Application number: 24848138.4
(22) Date of filing: 25.07.2024
(51) Int. Cl.: B60K 1/04, H01M 10/6567, B60L 50/60, B60L 58/26, B62D 21/09, H01M 50/249, H01M 50/244, H01M 10/613, H01M 10/625, H01M 10/6556

(54) **BATTERY PACK-VEHICLE BODY STRUCTURE AND VEHICLE**

(30) Priority: 28.07.2023 CN 202322030452 U
(71) Applicant: BYD Company Limited, Shenzhen, Guangdong 518118 (CN)
(72) Inventor: HUANG, Wei, Shenzhen, Guangdong 518118 (CN); DIAO, Yiwei, Shenzhen, Guangdong 518118 (CN); ZHU, Wenqiang, Shenzhen, Guangdong 518118 (CN); LIU, Xiaoyang, Shenzhen, Guangdong 518118 (CN); WU, Caiwen, Shenzhen, Guangdong 518118 (CN)
(74) Representative: Mathys & Squire
(86) International application number: PCT/CN2024/107551
(87) International publication number: WO 2025/026181

(57) **Abstract**

The present invention relates to a battery pack structure, and provides a battery pack-vehicle body structure, which includes a battery pack and a vehicle body. The battery pack includes a battery cell module, and a first cooling plate and a second cooling plate for cooling the battery cell module. The first cooling plate and the second cooling plate are respectively located above and below the battery cell module. The battery pack is connected to the vehicle body such that the top of the first cooling plate forms a floor panel region of the vehicle body. The present invention further provides a battery pack and a vehicle. The battery pack-vehicle body structure provided by the present invention can solve a problem of an excessive temperature rise caused by high currents during fast charging without reducing the ground clearance of the vehicle and meet the requirements for the vehicle lightweight development.

## Description

### CROSS-REFERENCE TO RELATED APPLICATIONS

This application claims priority to Chinese patent application No. 202322030452.1, filed on July 28, 2023, and entitled "BATTERY PACK-VEHICLE BODY STRUCTURE, AND VEHICLE", which is incorporated herein by reference in its entirety.

### TECHNICAL FIELD

This application relates to a battery pack structure, and optionally to a battery pack-vehicle body structure. In addition, it further relates to a vehicle.

### BACKGROUND

As battery charging rates of electric vehicles continuously increase, users have increasingly higher requirements for cooling capabilities of battery packs. Within the limited space of the battery packs, it is necessary to improve cooling capability of the battery packs. In addition, it is also necessary to equalize battery cell temperatures during fast charging, to maintain consistency of the battery cell temperatures, and improve battery safety.

In related art, a double-layer cooling design solves a problem of an excessive temperature rise caused by high currents during fast charging, ensuring that a battery can meet faster charging requirements. However, due to the design of double liquid cooling plates, the battery pack has a relatively large size, so that the battery pack occupies a Z-direction space on a vehicle, thereby reducing the ground clearance of the vehicle and affecting vehicle passability. In addition, the design of double liquid cooling plates further increases the weight of the battery pack, which does not meet the requirements of vehicle lightweight development.

### SUMMARY

A technical problem to be solved by a first aspect of this application is to provide a battery pack-vehicle body structure. The battery pack-vehicle body structure can solve the problem of an excessive temperature rise caused by high currents during fast charging, without reducing ground clearance of a vehicle, and meet the requirements of vehicle lightweight development.

A technical problem to be solved by a second aspect of this application is to provide a vehicle. The vehicle can maintain consistency of battery cell temperatures during fast charging, thereby ensuring battery safety, providing good vehicle passability, and meeting lightweight requirements.

To solve the foregoing technical problem, the first aspect of this application provides a battery pack-vehicle body structure, including a battery pack and a vehicle body, wherein the battery pack includes a battery cell module, and a first cooling plate and a second cooling plate for cooling the battery cell module, the first cooling plate and the second cooling plate being respectively located on two sides of the battery cell module, the battery pack being connected to the vehicle body, the vehicle body including a vehicle body floor, and the first cooling plate forming at least a portion of the vehicle body floor.

Optionally, the battery pack includes a battery pack frame. The battery pack frame, the first cooling plate, and the second cooling plate form a box structure for accommodating the battery cell module.

Optionally, the vehicle body includes a sill beam. The battery pack frame is connected to the sill beam. A sealing layer is disposed between the vehicle body and the first cooling plate.

Optionally, the first cooling plate includes a sealing plate, a support plate, a flow channel plate, and a temperature equalizing plate that are arranged in sequence. The sealing plate cooperates with the sealing layer for sealing. The support plate supports the sealing plate. The flow channel plate forms at least a portion of the vehicle body floor. The temperature equalizing plate is attached to the battery cell module, to perform heat conduction on the battery cell module.

Optionally, the sealing plate, the support plate, the flow channel plate, and the temperature equalizing plate are integrally connected. An insulating film is disposed on a side of the temperature equalizing plate away from the flow channel plate. The insulating film is a PI film.

Optionally, the vehicle body includes a sealing frame. The sealing layer is disposed between the sealing frame and the sealing plate, to form a seal between the sealing frame and the sealing plate. An outer periphery of the battery pack frame is provided with an extension mounting portion for connecting to the sill beam. In a height direction of the vehicle body, the top of the extension mounting portion is lower than the top of the sealing plate.

Optionally, the vehicle body includes a seat crossbeam laterally disposed on a side of the first cooling plate away from the second cooling plate. The battery pack frame is provided with a reinforcing crossbeam corresponding to the seat crossbeam. The first cooling plate is provided with a mounting hole, for a screw to pass through, at a location corresponding to the reinforcing crossbeam, so that the seat crossbeam and the reinforcing crossbeam are screwed together.

Optionally, the second cooling plate and the battery pack frame are integrally connected, and the first cooling plate is detachably connected to the battery pack frame.

Optionally, both the first cooling plate and the second cooling plate are direct cooling plates. A first heat-conducting element is disposed between the first cooling plate and the battery cell module. A second heat-conducting element is disposed between the second cooling plate and the battery cell module.

The second aspect of this application provides a vehicle, including a vehicle main body. The vehicle main body includes the battery pack-vehicle body structure according to the first aspect of this application.

According to the foregoing solution, this application has beneficial effects as follows:

In the battery pack-vehicle body structure provided in this application, the first cooling plate and the second cooling plate are disposed on upper and lower sides the battery cell module, so that cooling can be synchronously performed on the upper and lower sides of the battery cell module during high-power fast charging, avoiding the problem of excessive temperature rise of the battery cell module caused by high currents during fast charging. In addition, the top of the first cooling plate is directly used as the vehicle body floor of the vehicle body, implementing integration of the battery pack and the vehicle body, which eliminates the need for an original vehicle body floor and gap space between the first cooling plate and the vehicle body floor when a conventional battery pack is mounted. The ground clearance of the vehicle can be increased and the original vehicle body floor is no longer needed. This not only meets the vehicle lightweight requirements , but also saves overall vehicle costs.

Other features and advantages of this application will be described in detail in the following Description of Embodiments.

### BRIEF DESCRIPTION OF DRAWINGS

The accompanying drawings are intended to provide a further understanding of this application and constitute a portion of the specification. Together with the following specific implementations, they are used to explain this application, but do not constitute a limitation of this application. In the accompanying drawings:
FIG. 1 is a diagram of a structure of a specific embodiment of a battery pack-vehicle body structure according to this application;
FIG. 2 is an exploded view of a structure of a specific embodiment of a battery pack-vehicle body structure according to this application;
FIG. 3 is a diagram of a structure of a specific embodiment of a battery pack according to this application;
FIG. 4 is a diagram of a structure of a specific embodiment of a first cooling plate according to this application;
FIG. 5 is a diagram of a structure of a specific embodiment of a battery pack frame and a second cooling plate according to this application;
FIG. 6 is a diagram of a structure of a specific embodiment of a joint between a battery pack frame and a sill beam; and
FIG. 7 is a diagram of a structure of a specific embodiment of a vehicle according to this application.

### Reference numerals:

1: battery pack, 101: battery cell module, 102: battery pack frame, 102a: extension mounting portion, 102b: reinforcing crossbeam, 103: first cooling plate, 103a: sealing plate, 103b: support plate, 103c: flow channel plate, 103d: temperature equalizing plate, 103e: insulating film, 103f: mounting hole, 104: second cooling plate, 105: first heat-conducting element, 106: second heat-conducting element, 107: bottom shield plate, 2: vehicle body, 201: sill beam, 202: sealing frame, 203: seat crossbeam, 204: sill reinforcing beam, 205: vehicle body floor, 3: sealing layer, A: top region.

### DESCRIPTION OF EMBODIMENTS

The following describes specific implementations of this application in detail with reference to the accompanying drawings. It will be understood that the specific implementations described herein are merely used to illustrate and explain this application, and the protection scope of this application is not limited to the specific implementations described below.

In the description of this application, it should be noted that unless otherwise expressly specified and limited, the terms "form", "has", "provided with", "connect" and the like will be understood in a broad sense. For example, a connection may be a fixed connection, an indirect direction through an intermediate medium, a fixed connection, a detachable connection, or an integral connection; or a direct connection, an indirect connection through an intermediate connector, or a connection within two elements or an interaction between two elements. For persons of ordinary skill in the art, the specific meanings of the foregoing terms in this application will be understood according to specific situations.

In this application, unless otherwise specified, orientation terms used, such as "top, bottom, up, down, left, right, front, rear", are all defined by the top, bottom, up, down, left, right, front, and rear of a vehicle in a normal driving state. Specifically, a direction from a center of mass of the vehicle toward a vehicle ceiling is top and up, a direction from the center of mass of the vehicle toward a vehicle chassis is bottom and down, a direction from the center of mass of the vehicle toward a vehicle front end is front, a direction from the center of mass of the vehicle toward a vehicle rear end is rear, a direction from a right wheel of the vehicle toward a left wheel of the vehicle is left, and a direction from the left wheel of the vehicle toward the right wheel of the vehicle is right. In the following description, "lateral direction" refers to the left-right direction, "vertical direction" refers to the up-down direction, and "inner" and "outer" refer to inner and outer contours of relevant components. Orientation descriptions in the embodiments of this application are all based on an orientation of the vehicle in a vehicle assembly state in the embodiments of this application. In addition, it should be noted that the terms, such as "first", and "second", are used to distinguish one element from another, and do not imply order or importance.

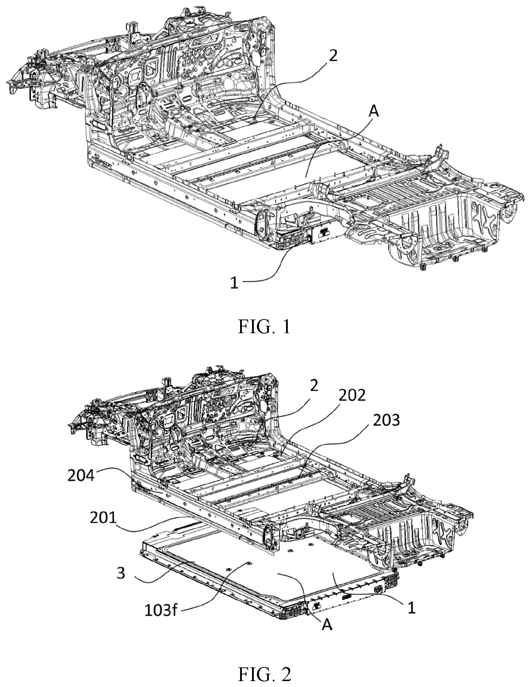

A first aspect of this application provides a battery pack-vehicle body structure. Referring to FIG. 1 to FIG. 6, in a specific embodiment of this application, the battery pack-vehicle body structure includes a battery pack 1 and a vehicle body 2. The battery pack 1 includes a battery cell module 101, a battery pack frame 102, and a first cooling plate 103 and a second cooling plate 104 for cooling the battery cell module 101. The first cooling plate 103 and the second cooling plate 104 are respectively located above (an F1 side) and below (an F2 side) the battery cell module 101. The battery pack frame 102, the first cooling plate 103, and the second cooling plate 104 form a box structure for accommodating the battery cell module 101. When high-power fast charging is performed, the first cooling plate 103 and the second cooling plate 104 can synchronously cool upper and lower sides of the battery cell module 101, thereby avoiding a problem of an excessive temperature rise of the battery cell module caused by high currents during fast charging. In addition, the battery pack 1 is connected to the vehicle body 2. A top 1031 (that is, a top region A) of the first cooling plate 103 forms at least a portion of a vehicle body floor 205 of the vehicle body 2, thereby implementing integration of the battery pack 1 and the vehicle body 2, which eliminates the need for an original vehicle body floor and a gap between the first cooling plate 103 and the vehicle body floor when a conventional battery pack is mounted. The ground clearance of the vehicle can be increased and the original vehicle body floor 205 is no longer needed. This not only meets the vehicle lightweight requirements, but also saves overall vehicle costs.

Referring to FIG. 2, a cavity is formed at a position, corresponding to the top region A, of the vehicle body 2. The vehicle body 2 includes sill beams 201 located on two lateral sides of the cavity. The sill beam 201 is further provided with a sill reinforcing beam 204 for structurally strengthening the sill beam 201. The battery pack frame 102 is connected to the sill beams 201 on the two lateral sides. To ensure structural stability at joints, optionally, the battery pack frame 102 may be connected to the bottom of the sill beam 201 by bolts, so as to implement a fixed connection between the battery pack 1 and the vehicle body 2. To ensure airtightness of an occupant compartment, a sealing layer 3 is disposed between the vehicle body 2 and the first cooling plate 103. The sealing layer 3 is optionally disposed around the top region A, so that when the battery pack frame 102 is fastened to the sill beam 201 by bolts, the vehicle body 2 and an upper surface of the first cooling plate 103 are jointly attached to the sealing layer 3, and the sealing layer 3 is compressed to seal the occupant compartment. In addition, after fastening is completed, the upper surface of the first cooling plate 103 is located in the cavity of the vehicle body 2, to form at least a portion of the vehicle body floor 205. The sealing layer 3 includes but is not limited to sealant, silicone foam, or structural adhesive. For example, sealant may be used, to fully fill the gap between the vehicle body 2 and the upper surface of the first cooling plate 103, avoiding openings, dead angles, and uneven surfaces, thereby ensuring the airtightness of the occupant compartment.

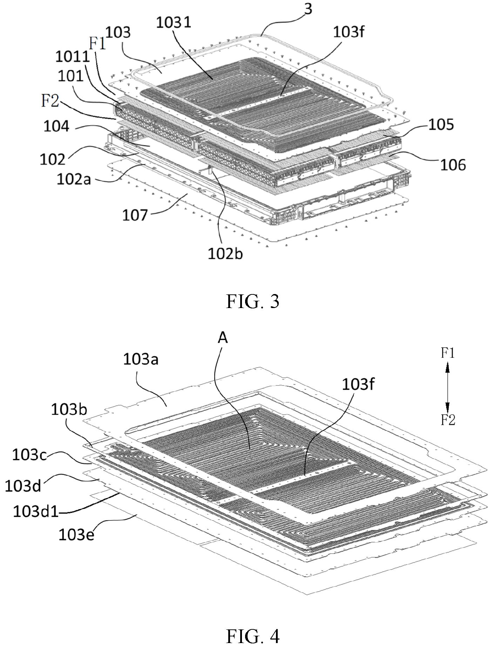

Referring to FIG. 3 and FIG. 4, the first cooling plate 103 includes a sealing plate 103a, a support plate 103b, a flow channel plate 103c, and a temperature equalizing plate 103d that are sequentially arranged from top down (that is, from F1 to F2). The sealing plate 103a and the support plate 103b are optionally disposed around the top region A, and the sealing plate 103a cooperates with the sealing layer 3 for sealing. The support plate 103b supports the sealing plate 103a, to ensure structural strength at a seal and prevent deformation that could affect a sealing effect of the occupant compartment. To meet the vehicle lightweight requirements, the sealing plate 103a and the support plate 103b are optionally be made of stamped aluminum sheet. An annular structure with a cavity is formed between the sealing plate 103a and the support plate 103b, so that the top of the flow channel plate 103c forms at least a portion of the vehicle body floor 205. The flow channel plate 103c is formed by stamping a sheet to form a flow channel for flowing of a cooling liquid or refrigerant, thereby cooling the battery cell module 101. The flow channel plate 103c has good structural strength, and the top of the flow channel plate meets structural strength requirements of the vehicle body floor 205. The temperature equalizing plate 103d is disposed between the battery cell module 101 and the flow channel plate 103c. The bottom 103d1 of the temperature equalizing plate is attached to the top 1011 of the battery cell module 101, and the top of the same is attached to the bottom of the flow channel plate 103c, to perform heat conduction on the battery cell module 101, which improves heat dissipation efficiency of the battery cell module 101, achieves good control on temperature differences of different portions of the battery cell module 101, and implements good temperature equalizing performance. In addition, the temperature equalizing plate 103d has a relatively thin thickness, which has little impact on an overall thickness of the battery pack 1, thereby avoiding interference with vehicle passability.

To ensure safety of the occupant compartment, an insulating film 103e is disposed at the bottom 103d1 of the temperature equalizing plate 103d, to insulate the temperature equalizing plate 103d from the battery cell module 101, thereby improving insulation performance of the battery pack 1. The insulating film 103e may be made of but is not limited to polypropylene, polyimide, or polyamide. Optionally, the insulating film is a PI film (polyimide film), and has good insulation performance and excellent heat resistance. When the battery cell module 101 heats up during charging, the insulating film 103e remains stable in use, possesses excellent mechanical properties, and is not easy to damage. The insulating film 103e can be adhered to a lower surface of the temperature equalizing plate 103d through rolling and bonding, thereby ensuring attachment flatness.

To further improve the airtightness of the occupant compartment, the sealing plate 103a, the support plate 103b, the flow channel plate 103c, and the temperature equalizing plate 103d are integrally connected, or optionally integrally connected by brazing.

Brazing filler metal having a lower melting point than weldment components (the sealing plate 103a, the support plate 103b, the flow channel plate 103c, and the temperature equalizing plate 103d) is molten and filled into gaps between the weldment components to form an integrated connection. Because a welding temperature is lower than melting points of the weldment components, thermal deformation of the weldment components can be greatly reduced, and dimensional accuracy of the weldment components can be ensured, thereby ensuring airtightness between the first cooling plate 103 and the vehicle body 1.

It should be noted that there are a plurality of ways to form a seal between the sealing plate 103a and the vehicle body 1. For example, in a specific implementation, the bottom of the sill beam 201 is used as a sealing surface. The upper surface of the sealing plate 103a is directly pressed on the bottom of the sill beam 201 via the sealing layer 3. When the battery pack frame 102 is fastened to the sill beam 201, the sealing layer 3 is compressed to form a seal. In another optional implementation, referring to FIG. 2 to FIG. 4 and FIG. 6, the vehicle body 2 includes a sealing frame 202. The sealing frame 202 is disposed around the top region A, and integrally welded to a cavity side wall at a position, corresponding to the top region A, of the vehicle body 2, to improve connection reliability of the sealing frame 202 and the vehicle body 2. The sealing layer 3 is disposed between the bottom of the sealing frame 202 and the top of the sealing plate 103a to form a seal, and an outer periphery of the battery pack frame 102 is provided with an extension mounting portion 102a for connecting to the sill beam 201. In a vertical direction, the top of the extension mounting portion 102a is lower than the top of the sealing plate 103a, and accordingly, the bottom of the sealing frame 202 is lower than the bottom of the sill beam 201, so that when the battery pack 1 is connected to the vehicle body, the first cooling plate 103 can be embedded into the cavity of the vehicle body 1. When the extension mounting portion 102a and the sill beam 201 are fastened by bolts, the sealing plate 103a compresses the sealing layer 3 between the sealing plate and the sealing frame 202 to form a seal, which can raise an overall height of the battery pack 1, thereby further increasing the ground clearance of the vehicle, and reducing a possibility of impacting the bottom of the battery pack 1.

Referring to FIG. 2 to FIG. 5, the vehicle body 2 further includes a seat crossbeam 203 laterally disposed on the top of the first cooling plate 103. The seat crossbeam 203 provides a mounting function for seats and other systems, enhances an overall lateral stiffness of the vehicle body 2, and improves lateral impact resistance. In addition, because an overall weight of the battery pack 1 is large, to further improve mounting strength between the battery pack 1 and the vehicle body 2, a reinforcing crossbeam 102b is laterally disposed on a position, corresponding to the seat crossbeam 203, of the battery pack frame 102. Mounting holes 103f for screws are formed in positions, corresponding to the reinforcing crossbeam 102b, of the first cooling plate 103, so that the seat crossbeam 203 and the reinforcing crossbeam 102b are screwed together.

It should be noted that a structure of the second cooling plate 104 is consistent with a structure, that implements a cooling function, of the first cooling plate 103. The second cooling plate 104 includes the temperature equalizing plate and the flow channel plate that are arranged up and down. The top of the temperature equalizing plate is attached to the bottom of the battery cell module 101, to perform heat conduction on the battery cell module 101. During fast charging, the first cooling plate 103 and the second cooling plate 104 form a double-layer cooling system, to synchronously perform heat dissipation on the upper and lower surfaces of the battery cell module 101, thereby improving a heat dissipation capability of the battery cell module 101. In addition, the first cooling plate 103 and the second cooling plate 104 are jointly connected to the same cooling liquid inlet or refrigerant inlet, thereby ensuring that heat dissipation capabilities of the first cooling plate 103 and the second cooling plate 104 are the same, so as to equalize the temperatures of the battery cell module 101, and achieve more uniform temperatures on the upper and lower surfaces of the battery cell module 101. Because the second cooling plate 104 is located at the bottom of the vehicle, and impact may occur during a forming process, a bottom guard plate 107 can be disposed below the second cooling plate 104, to provide overall protection for the second cooling plate 104 and the battery pack 1.

The first cooling plate 103 and the second cooling plate 104 may be liquid cooling plates or direct cooling plates, both of which fall within the protection range of this application. In an optional implementation, both the first cooling plate 103 and the second cooling plate 104 are direct cooling plates, providing a better heat dissipation capacity during fast charging of the battery cell module 101. In addition, to improve the heat conduction capacity between the battery cell module 101 and each of the first cooling plate 103 and the second cooling plate 104, a first heat-conducting element 105 is disposed between the bottom of the first cooling plate 103 and the top of the battery cell module 101, and a second heat-conducting element 106 is disposed between the top of the second cooling plate 104 and the bottom of the battery cell module 101. Further, optionally, both the first heat-conducting element 105 and the second heat-conducting element 106 are heat-conducting adhesives, which can effectively fill a gap between contact surfaces, and possess excellent adhesion performance, ensuring attachment between the battery cell module 101 and each of the first cooling plate 103 and the second cooling plate 104.

In an optional implementation, the second cooling plate 104 is integrally connected to the bottom of the battery pack frame 102, so that the second cooling plate 104 is integrated on the battery pack frame 102 to form a bottom plate of the battery pack 1, so as to directly bear the battery cell module 101. The second cooling plate 104 may optionally be integrally connected to the bottom of the battery pack frame 102 by friction stir welding, which is low in cost and has a small change on microstructures of a heat-affected zone of a welded joint. Residual stress is relatively low and a welded workpiece is not easy to deform. Subsequent assembly is facilitated when integration degree of the battery pack frame 202 is improved. The second cooling plate 104 and the battery pack frame 102 form a box structure without a cover. The battery cell module 101 is placed into the box structure. A lower surface of the battery cell module 101 is adhered to the second cooling plate 104 via a heat-conducting adhesive, and then the box structure is covered with the first cooling plate 103. An upper surface of the battery cell module 101 is adhered to the first cooling plate 103 via the heat-conducting adhesive. The first cooling plate 103 is detachably connected to the top of the battery pack frame 102, and can be fastened to the same by bolts. Then, the battery pack 1 formed is fastened to the bottom of the sill beam 201 via the extension mounting portion 102a on the battery pack frame 102. While fastening, the sealing plate 103a and the sealing frame 202 jointly compress the sealing layer 3, to seal the occupant compartment, so that the battery pack 1 and the vehicle body 2 form a highly integrated whole, improving rigidity and torsion strength of the bottom of the vehicle.

According to the foregoing technical solution, in the limited space of the battery pack 1 of the battery pack-vehicle body structure provided in the first aspect of this application, the first cooling plate 103 and the second cooling plate 104 are respectively disposed on upper and lower sides of the battery cell module 101, to form a double-layer direct cooling plate that greatly improves a cooling capacity of the battery pack 1 and effectively equalizes the temperatures of the battery cell module 101. This balances the temperatures of the battery cell module 101 during charging while allowing for higher power charging. The upper surface of the first cooling plate 103 is directly used as a portion of the vehicle body floor 205 of the vehicle body 2, to replace an original conventional floor of the vehicle body, and the sealing layer 3 is disposed between the first cooling plate 103 and the vehicle body 2 to ensure the airtightness of the occupant compartment, so that the vehicle body floor is no longer needed when a conventional battery pack is mounted, the vehicle lightweight requirements are met, and vehicle costs are saved. In addition, the gap between the first cooling plate 103 and the vehicle body floor is eliminated, which can increase the ground clearance of the vehicle, improve vehicle passability, and reduce a possibility of impacting the bottom of the battery pack 1. The second cooling plate 104 is directly integrated on the battery pack frame 102, using as a bottom plate to directly bear the battery cell module 101. During subsequent assembly, the battery cell module 101 is directly placed in the box structure without a cover formed by integrated connection of the second cooling plate 104 and the battery pack frame 102, improving assembly convenience. In addition, the battery cell module 101 in the battery pack 1 is adhered to the first cooling plate 103 and the second cooling plate 104 via the heat-conducting adhesive, resulting in a tight, gapless internal connection within the battery pack 1, forming a highly integrated whole. In addition, the battery pack 1 is fastened to the sill beam 201, so that the battery pack 1 and the vehicle body 2 form a highly integrated whole, improving bottom rigidity and torsional strength of the vehicle.

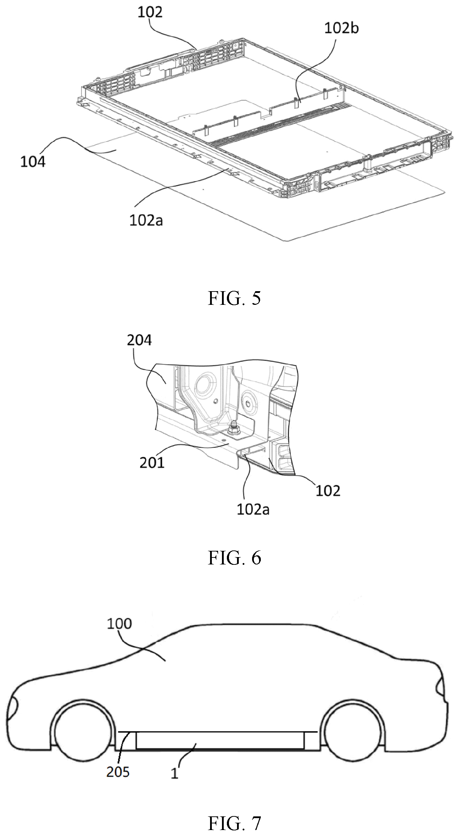

The second aspect of this application provides a vehicle. In a specific embodiment of the vehicle of this application. Referring to FIG. 7, the vehicle includes a vehicle main body 100. The vehicle main body 100 includes the battery pack-vehicle body structure provided in the first aspect of this application, and therefore has all beneficial effects thereof, which will not be described herein again.

The foregoing describes preferred implementations of this application in detail with reference to the accompanying drawings. However, this application is not limited to specific details in the foregoing implementations. Within the technical concept of this application, a plurality of simple variations may be made to the technical solutions of this application, and all these simple variations fall within the scope of protection of this application.

In addition, it should be noted that the specific technical features described in the specific implement may be combined in any appropriate manner without contradiction. To avoid unnecessary repetition, various possible combination modes are not separately described in this application.

In addition, any combination of different implementations of this application may be made, and should be considered as the content disclosed in this application as long as it does not violate the spirit of this application.

## Claims

1. A battery pack-vehicle body structure, wherein the battery pack-vehicle body structure comprises a battery pack (1) and a vehicle body (2), the battery pack (1) comprises a battery cell module (101), and a first cooling plate (103) and a second cooling plate (104) for cooling the battery cell module (101), the first cooling plate (103) and the second cooling plate (104) are respectively located on two sides of the battery cell module (101), the battery pack (1) is connected to the vehicle body (2), the vehicle body (2) comprises a vehicle body floor (205), and the first cooling plate (103) forms at least a portion of the vehicle body floor (205).

2. The battery pack-vehicle body structure according to claim 1, wherein the battery pack (1) comprises a battery pack frame (102), the battery pack frame (102), the first cooling plate (103), and the second cooling plate (104) form a box structure for accommodating the battery cell module (101).

3. The battery pack-vehicle body structure according to claim 2, wherein the vehicle body (2) comprises a sill beam (201), the battery pack frame (102) is connected to the sill beam (201), and a sealing layer (3) is disposed between the vehicle body (2) and the first cooling plate (103).

4. The battery pack-vehicle body structure according to claim 3, wherein the first cooling plate (103) comprises a sealing plate (103a), a support plate (103b), a flow channel plate (103c), and a temperature equalizing plate (103d) that are arranged in sequence, the sealing plate (103a) cooperates with the sealing layer (3) for sealing, the support plate (103b) supports the sealing plate (103a), the flow channel plate (103c) forms at least a portion of the vehicle body floor (205), and the temperature equalizing plate (103d) is attached to the battery cell module (101), to perform heat conduction on the battery cell module (101).

5. The battery pack-vehicle body structure according to claim 4, wherein the sealing plate (103a), the support plate (103b), the flow channel plate (103c), and the temperature equalizing plate (103d) are integrally connected, an insulating film (103e) is disposed on a side of the temperature equalizing plate (103d) away from the flow channel plate (103c), , and the insulating film is a PI film.

6. The battery pack-vehicle body structure according to claim 4 or 5, wherein the vehicle body (2) comprises a sealing frame (202), the sealing layer (3) is disposed between the sealing frame (202) and the sealing plate (103a), to form a seal between the sealing frame (202) and the sealing plate (103a), an outer periphery of the battery pack frame (102) is provided with an extension mounting portion (102a) for connecting to the sill beam (201), and in a height direction of the vehicle body (2), the top of the extension mounting portion (102a) is lower than the top of the sealing plate (103a).

7. The battery pack-vehicle body structure according to any one of claims 2 to 6, wherein the vehicle body (2) comprises a seat crossbeam (203) laterally disposed on a side of the first cooling plate (103) away from the second cooling plate (104), the battery pack frame (102) is provided with a reinforcing crossbeam (102b) corresponding to the seat crossbeam (203), and the first cooling plate (103) is provided with a mounting hole (103f), for a screw to pass through, at a location corresponding to the reinforcing crossbeam (102b), so that the seat crossbeam (203) and the reinforcing crossbeam (102b) are screwed together.

8. The battery pack-vehicle body structure according to any one of claims 2 to 7, wherein the second cooling plate (104) and the battery pack frame (102) are integrally connected, and the first cooling plate (103) is detachably connected to the battery pack frame (102).

9. The battery pack-vehicle body structure according to any one of claims 2 to 8, wherein both the first cooling plate (103) and the second cooling plate (104) are direct cooling plates, a first heat-conducting element (105) is disposed between the first cooling plate (103) and the battery cell module (101), and a second heat-conducting element (106) is disposed between the second cooling plate (104) and the battery cell module (101).

10. A vehicle, wherein the vehicle comprises a vehicle main body (100), and the vehicle main body (100) comprises the battery pack-vehicle body structure according to any one of claims 1 to 9.
